(19) Europäisches Patentamt
European Patent Office
Office européen des brevets

(11) **EP 1 013 402 B1**

(12) **EUROPÄISCHE PATENTSCHRIFT**

(45) Veröffentlichungstag und Bekanntmachung des Hinweises auf die Patenterteilung:
**15.04.2009 Patentblatt 2009/16**

(51) Int Cl.:
***B29C 47/40*** *(2006.01)*

(21) Anmeldenummer: **99124263.7**

(22) Anmeldetag: **04.12.1999**

(54) **Zwei-Wellen-Extruder**

Twin screw extruder

Extrudeuse à deux vis

(84) Benannte Vertragsstaaten:
**BE DE FR NL**

(30) Priorität: **24.12.1998 DE 19860256**

(43) Veröffentlichungstag der Anmeldung:
**28.06.2000 Patentblatt 2000/26**

(73) Patentinhaber: **Coperion GmbH**
**70469 Stuttgart (DE)**

(72) Erfinder:
• **Burkhardt, Ulrich**
**70372 Stuttgart (DE)**
• **Weihrich, Gerhard**
**75428 Illingen (DE)**

(74) Vertreter: **Rau, Albrecht et al**
**Patentanwälte**
**Rau, Schneck & Hübner**
**Königstrasse 2**
**90402 Nürnberg (DE)**

(56) Entgegenhaltungen:
DE-A- 2 802 125           DE-A- 4 329 612
DE-A- 19 718 292          DE-B- 1 035 890
DE-C- 813 154             DE-C- 4 338 795

• **PATENT ABSTRACTS OF JAPAN vol. 1997, no. 08, 29. August 1997 (1997-08-29) -& JP 09 109231 A (TOSHIBA MACH CO LTD), 28. April 1997 (1997-04-28)**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft einen Zwei-Wellen-Extruder gemäß dem Oberbegriff des Anspruches 1.

Aus der DE 813 154 B sind eingängige Knetscheiben bekannt. Diese weisen einen Kamm-Winkel größer als 90° auf und besitzen insofern eine relativ große Querschnittsfläche. Die Knetscheiben streifen sowohl das Gehäuse als auch sich gegenseitig ab. Die Durchmischung mit Knetscheiben dieser Art ist gering. Dasselbe gilt für die Knetwirkung. Weiterhin ist auch die freie Querschnittsfläche festgelegt und damit innerhalb eines Längs-Abschnitts des Extruders die mittlere Verweilzeit des zu bearbeitenden Materials.

In der DE 28 02 125 A1 ist ein Zwei-Wellen-Extruder mit einem mehrere Knetscheibenpaare umfassenden Knetabschnitt beschrieben. Die beiden Extruderwellen drehen sich gleichsinnig. Die Knetscheiben auf beiden Extruderwellen sind, in Arbeitsrichtung gesehen, gleichsinnig um den jeweils gleichen Versatzwinkel gegeneinander versetzt. Zwischen auf einer Extruderwelle benachbarten Knetscheiben sind Kreisringe alternierenden Durchmessers angeordnet, die eine Zick-Zack-Förderbahn des Extrudats vorgeben.

Aus der DE 197 18 292 A1 sind gemäß Fig. 2 zweigängige Knetscheiben bekannt, die einander über die volle Länge abstreifen. Durch das Absteifen der Knetscheiben entstehen hohe Schwergeschwindigkeiten, die im zu verarbeitenden Material zu unnötigen Temperaturspitzen führen. Darüber hinaus erfolgt bei zweigängigen Knetscheiben eine schlecht Durchmischung des Materials eines Gangs mit dem Material des anderen Gangs.

Ein Knetwerkzeug mit einer einen Kamm aufweisenden Knetscheibe ist aus der DE 1 035 890 bekannt. Wie diese Knetscheibe in einem Zwei-Wellen-Extruder arbeitet, ist dort nicht im Einzelnen offenbart.

Aus der DE 43 29 612 A (entsprechend US-Patentanmeldung 08/292 876) ist ein Schnecken-Element für eine Schnecken-Maschine bekannt. Die Schnecken-Elemente sind schraubenförmig ausgebildet und weisen unterschiedliche Steigungsrichtungen auf. Die Längsmischung wird durch die entgegengesetzte Verschraubung erreicht, während die Quermischung durch den langgestreckten Keil des Flankenbogens erzielt wird. Bei dieser Querströmung handelt es sich um eine typische zusammenhängende Scherströmung, also primär um einen dispersiven Mischvorgang. Eine Stromaufteilung in unterschiedliche Teilströme, deren Umlagerung und versetzte Zusammenführung erfolgt nicht, weshalb die distributive Mischung nicht optimal ist.

Ein entsprechendes Schnecken-Element für einen Schnecken-Extruder ist aus der JP 09-109231 A bekannt.

Aus der DE 43 38 795 C ist eine mehrwellige, kontinuierlich arbeitende Mischmaschine für plastifizierbare Massen bekannt. Hierbei sind zwischen zwei dicht kämmenden Förderschnecken und einem Stauelement eine vorwärts fördernde und benachbart dazu eine rückwärts fördernde nicht kämmende Schnecke vorgesehen. Von Nachteil ist, daß die Gehäusewand nicht abgestreift werden kann, da die Schnecken einen Durchmesser besitzen, der dem halben Achsabstand entspricht. Hierdurch wird ein Anbacken des zu bearbeitenden Materials an der Gehäusewand nicht verhindert. Da die Gehäusewand nicht abgestreift wird, ergibt sich ein sehr schlechter Wärmeübergang. Bei hohen Temperaturdifferenzen zwischen der Gehäusewand und der Produkttemperatur ergeben sich somit große Temperaturinhomogenitäten, die darüber hinaus zu einer Beeinträchtigung des zu verarbeitenden Materials führen.

Der Erfindung liegt die Aufgabe zugrunde, einen Zwei-Wellen-Extruder der bekannten Art derart weiterzubilden, daß bei minimalem Energieeintrag und großer Verweilzeit das gesamte zu mischende Material vollständig distributiv gemischt und gleichzeitig die Gehäusewand vollständig abgestreift wird.

Die Aufgabe wird durch den kennzeichnenden Teil des Anspruchs 1 gelöst. Der Kern der Erfindung besteht darin, zylindrische Knetscheiben, also Knetscheiben mit parallel zu ihrer jeweiligen Achse verlaufenden Mantellinien, mit einem sehr geringen Kamm-Winkel vorzusehen. Hierdurch wird die Energieeinleitung reduziert und eine Durchmischung des gesamten Volumens erreicht. Ferner ist ein vollständiges Abstreifen der Wände der Gehäuse-Bohrungen sichergestellt, d. h. es erfolgen keine Anbackungen und gute Wärmeübergänge sind gewährleistet. Die Keilströmungen längs der Knetscheiben-Flanken verhindern, daß Totzonen mit geringer Durchmischung entstehen. Das Ineinandergreifen der Knetscheiben stellt eine intensive Durchmischung des zu verarbeitenden Materials sicher. Die Knetscheiben streifen sich zumindest teilweise gegenseitig ab. Bei konstantem Gehäuse-Bohrungs-Durchmesser wird der für das zu bearbeitende Material zur Verfügung stehende freie Querschnitt erhöht, wodurch der Durchsatz erhöht wird. Die Anordnung der Knetscheiben weist zudem den Vorteil auf, daß durch eine zirkulierende Förderung eine besonders intensive Durchmischung erreicht werden kann.

Weitere vorteilhafte Weiterbildungen der Erfindung ergeben sich aus den Unteransprüchen.

Zusätzliche Vorteile und Merkmale der Erfindung ergeben sich aus der Beschreibung eines Ausführungsbeispiels anhand der Zeichnung. Es zeigen:

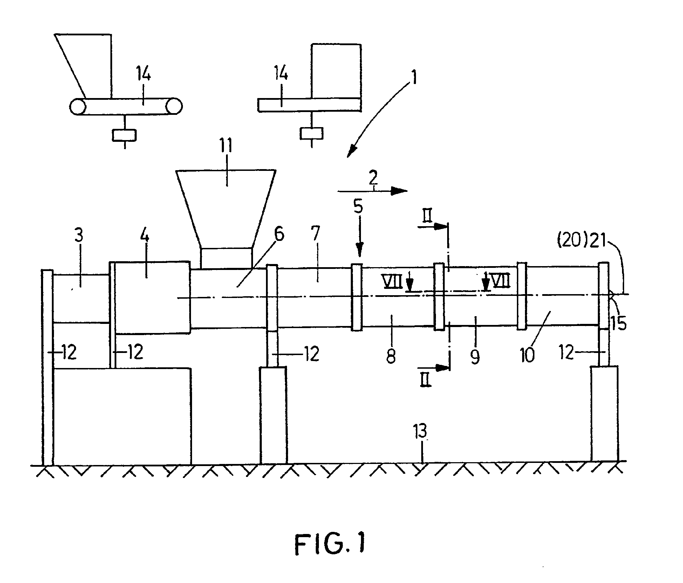

Fig. 1    eine Seiten-Längs-Ansicht eines Zwei-Wellen-Extruders in schematischer Darstellung,

Fig. 2    einen Querschnitt durch den Extruder gemäß der Schnittlinie II-II in Figur 1 mit der Darstellung zweier erfindungsgemäßer Knetscheiben,

Fig. 3 a) bis h) einen Querschnitt gemäß Figur 2 zu verschiedenen Zeitpunkten in chronologischer Folge mit einem Profil-Versatz-Winkel z = 0°,

Fig. 4 a) bis h) Darstellungen wie in Figur 3 mit einem Profil-Versatz-Winkel z = 45°,

Fig. 5 a) bis h) Darstellungen wie in Figur 3 mit einem Profil-Versatz-Winkel z = 90°,

Fig. 6 eine Ansicht wie in Figur 2 mit hintereinander versetzt angeordneten Knetscheiben und

Fig. 7 einen Teil-Längs-Schnitt durch den Extruder gemäß der Schnittlinie VII-VII in Figur 1.

Ein Zwei-Wellen-Extruder 1 weist entlang einer Arbeits-Richtung 2 jeweils einander nachgeordnet einen Antriebs-Motor 3, ein mit diesem eingangsseitig verbundenes Getriebe 4 und ein mit diesem verbundenes Gehäuse 5 auf. Das Gehäuse 5 besteht aus mehreren entlang der Arbeits-Richtung 2 angeordneten, miteinander verbundenen Gehäuse-Abschnitten 6, 7, 8, 9 und 10, die auch als Schüsse bezeichnet werden. Am Gehäuse-Abschnitt 6 ist ein Einlaß-Trichter 11 zur Zuführung von in dem Extruder 1 zu verarbeitendem Material vorgesehen. Die zuvor genannten Teile des Extruders 1 sind über Stützen 12 gegenüber einem Fundament 13 abgestützt und mit diesem verbunden. Oberhalb des Einlaß-Trichters 11 sind Dosier-Einrichtungen 14 zur mengendosierten Zuführung, beispielsweise von KunststoffGranulat oder -Pulver, zum Einlaß-Trichter 11 vorgesehen. Am in Arbeits-Richtung 2 stromabwärts liegenden Ende des Gehäuse-Abschnitts 10 ist eine Austrags-Öffnung 15 zum Austrag des in dem Extruder 1 verarbeiteten Materials vorgesehen.

Das Gehäuse 5 weist zwei einander teilweise durchdringende, zueinander parallele Gehäuse-Bohrungen 16, 17 auf. In den Gehäuse-Bohrungen 16, 17 sind zwei, nur schematisch dargestellte, jeweils gleichsinnig in einer Dreh-Richtung 18, 19 um jeweils eine Drehachse 20, 21 drehantreibbare Wellen 22, 23 vorgesehen, welche mit der Abtriebsseite des Getriebes 4 verbunden sind. Auf den Wellen 22, 23 sind drehfest verschiedene Verarbeitungselemente vorgesehen, wie z. B. miteinander kämmende Schnekken-Elemente 24 und Knetscheiben 25, 26, die je nach ihrer Funktion ausgewählt und hintereinander in Arbeits-Richtung 2 angeordnet sind.

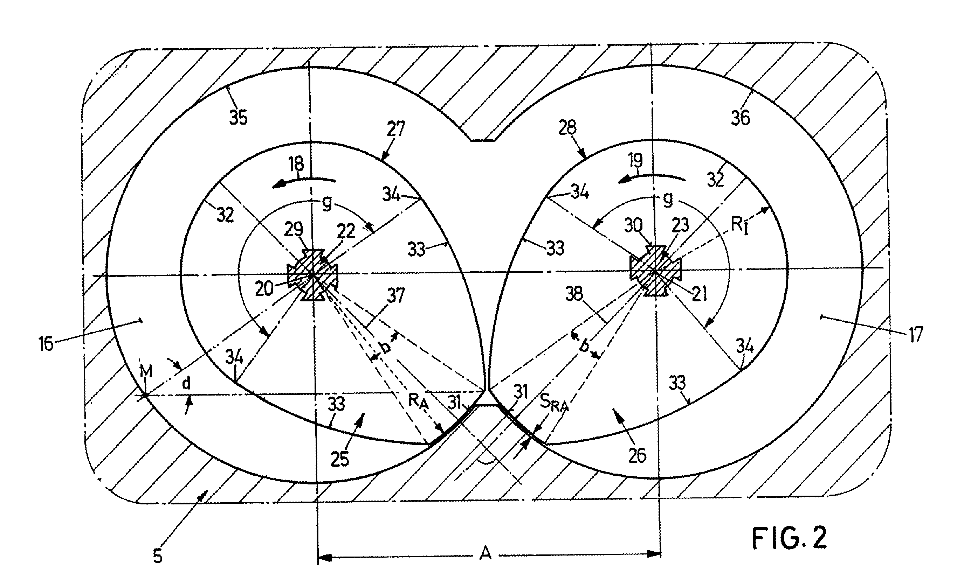

Im folgenden werden unter Bezugnahme auf Fig. 2 die Knetscheiben 25, 26 genauer beschrieben. Die Knetscheiben 25, 26 weisen parallel zu den Drehachsen 20 bzw. 21 verlaufende Mantellinien 27, 28 sowie mittig zur Aufnahme der Wellen 22 bzw. 23 vorgesehene Ausnehmungen 29 bzw. 30 auf. Die Knetscheiben 25, 26 weisen in einer Querschnittsdarstellung senkrecht zu den Drehachsen 20 bzw. 21, einen Kamm 31, einen Grund 32 und zwei die beiden verbindende Flanken 33 auf. Der Kamm 31 ist als KreisAbschnitt um die jeweilige Drehachse 20 bzw. 21 mit einem Kamm-Winkel b und einem Radius $R_A$ ausgebildet. Der Grund 32 ist als Kreis-Abschnitt um die jeweilige Drehachse 20 bzw. 21 mit einem Grund-Winkel g und einem Radius $R_I$ ausgebildet, wobei gilt: $R_A > R_I$. Die Flanken 33 sind als Kreisabschnitt mit Zentrumswinkel d um Mittelpunkte M ausgebildet. Ein Mittelpunkt M ist in Fig. 2 für die rechte Flanke 33 der Knetscheibe 25 gezeigt. Der Mittelpunkt M ergibt sich durch die Verlängerung jeweils eines Endes 34 des Grundes 32 über die jeweilige Drehachse 20 bzw. 21 hinaus um eine Länge $R_A + R_I$. Die Radien der die Flanken 33 bildenden Kreisabschnitte sind somit $R_A + R_I$. Die Knetscheiben 25, 26 besitzen also im wesentlichen einen eiförmigen Querschnitt. Mit den bisher eingeführten Größen kann ein Winkel $b_E$ definiert werden: $b_E = 180° - 2 * \arccos \{0{,}5 * [1 + 1 / (R_A/R_I)]\}$. Die Drehachsen 20, 21 weisen einen Abstand A voneinander auf, der wenig größer ist als $R_A + R_I$.

Die Gehäusebohrungen 16, 17 haben einen Durchmesser von $2 * R_A + 2 * S_{RA}$, wobei $S_{RA}$ das Radialspiel zwischen dem Kamm 31 und der Gehäusewand 35 ist. Die Gehäusebohrungen 16, 17 sind im Abstand $A = R_A + R_I + S_A$ angeordnet, wobei $S_A$ das Achsabrückungsspiel ist. Die Gehäusebohrungen 16, 17 überschneiden sich somit und bilden im Querschnitt die Form einer Acht.

Neben dem Spiel, mit welchem sich die Knetscheiben 25, 26 gegenseitig abstreifen, ist auch das Radialspiel $S_{RA}$ von Bedeutung. Bei vielen verfahrenstechnischen Aufgaben muß das Radialspiel $S_{RA}$ dem Verarbeitungsprozeß angepaßt werden. Dies kann auf verschiedene Weisen erreicht werden. Bei gleichbleibendem Profil der Knetscheiben 25, 26 wird der Durchmesser der Gehäusebohrungen 16, 17 entsprechend vergrößert. Alternativ kann bei gleichbleibendem Durchmesser der Gehäusebohrungen 16, 17 der Radius $R_A$ der Knetscheiben 25, 26 verkleinert werden. Ferner kann alternativ bei gleichbleibendem Durchmesser der Gehäusebohrungen 16, 17 der Radius $R_A$ verkleinert und der Radius $R_I$ entsprechend vergrößert werden. Insgesamt ergibt sich ein kleineres Verhältnis $R_A / R_I$. Dieses kleinere Radienverhältnis erzeugt einen kleineren Winkel, den sogenannten Keilwinkel, zwischen der Flanke 33 der Knetscheiben 25, 26 und der Wand 35, wobei sich eine bessere Dehnströmung ausbilden kann, die günstige Homogenisierungseffekte bewirkt. Alternativ kann ferner ein kleineres Radialspiel $S_{RA}$ mit einem kleineren Keilwinkel zwischen der Flanke 33 und der Wand 35 erreicht werden, wenn die Knetscheiben 25, 26 exzentrisch bezogen auf die in Fig. 2 gezeigten Drehachsen 20, 21 angeordnet werden. Auch bei der Alternative, nach der der Radius $R_A$ bei gleichbleibendem Gehäusebohrungsdurchmesser entsprechend verkleinert wird, können die Knetscheiben 25, 26 exzentrisch angeordnet sein.

Für den Kamm-Winkel b gilt: $3° \leq b \leq 20°$, besonders bevorzugt $3° \leq b \leq 10°$. Die Knetscheiben 25, 26 sind jeweils spiegelsymmetrisch zu einer Mittel-Längs-Ebene 37 bzw. 38 durch die Drehachsen 20 bzw. 21 und durch die Mitte der jeweiligen Kämme 31 ausgebildet. Die Knetscheiben 25, 26 sind jeweils eingängig, d. h. der Raum um eine Knetscheibe 25 bzw. 26 innerhalb einer Gehäuse-Bohrung 16 bzw. 17 wird durch den Kamm 31 nur einfach geteilt.

Zwei Knetscheiben 25, 26, die auf den Wellen 22 bzw. 23 im gleichen Querschnitt angeordnet sind, werden als Knetscheiben-Paar 39 bezeichnet. Es ist auch möglich, im gleichen Querschnitt einer Knetscheibe 25 einer bestimmten Dicke zwei Knetscheiben 26 der halben Dicke auf der anderen Welle anzuordnen. Genauso ist es möglich, im gleichen Querschnitt einer Knetscheibe 25 einer bestimmten Dicke beliebig viele Knetscheiben 26 auf der anderen Welle anzuordnen, wobei die Summe der Dicken aller Knetscheiben 26 die Dicke der Knetscheibe 25 nicht überschreiten darf und der Profilversatzwinkel z innerhalb der erlaubten Grenzen liegen muß.

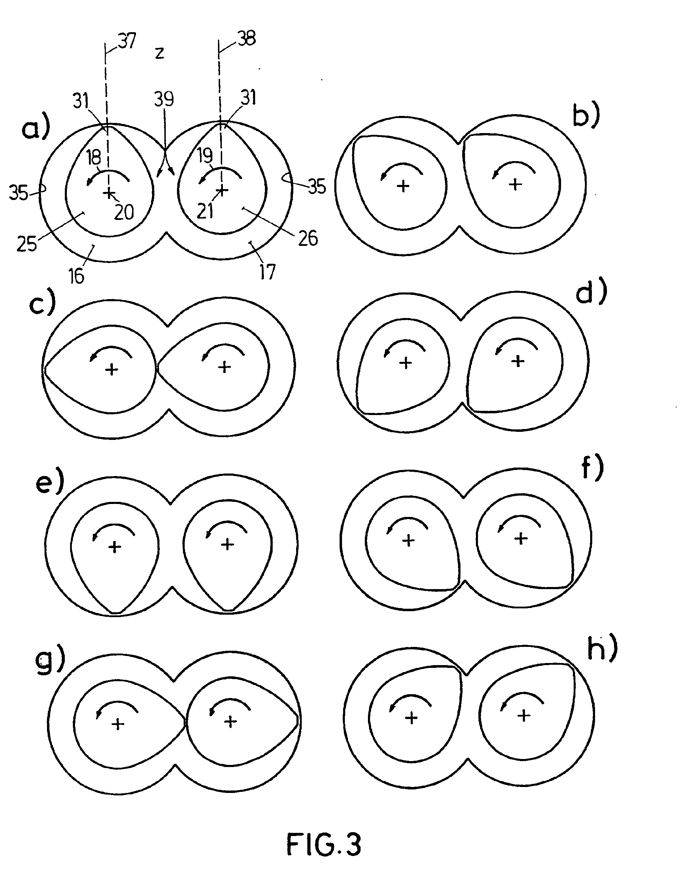

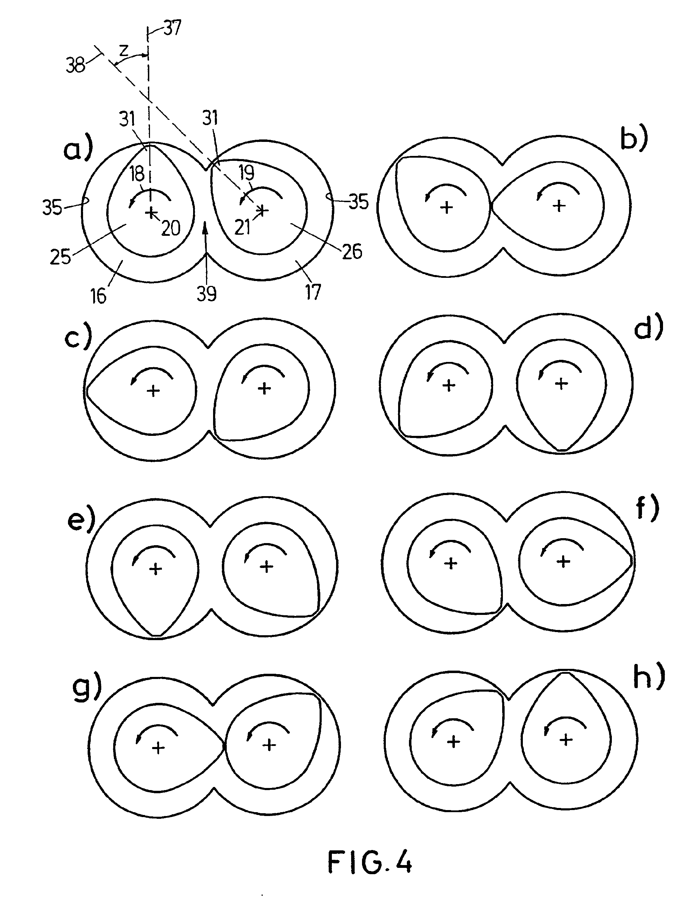

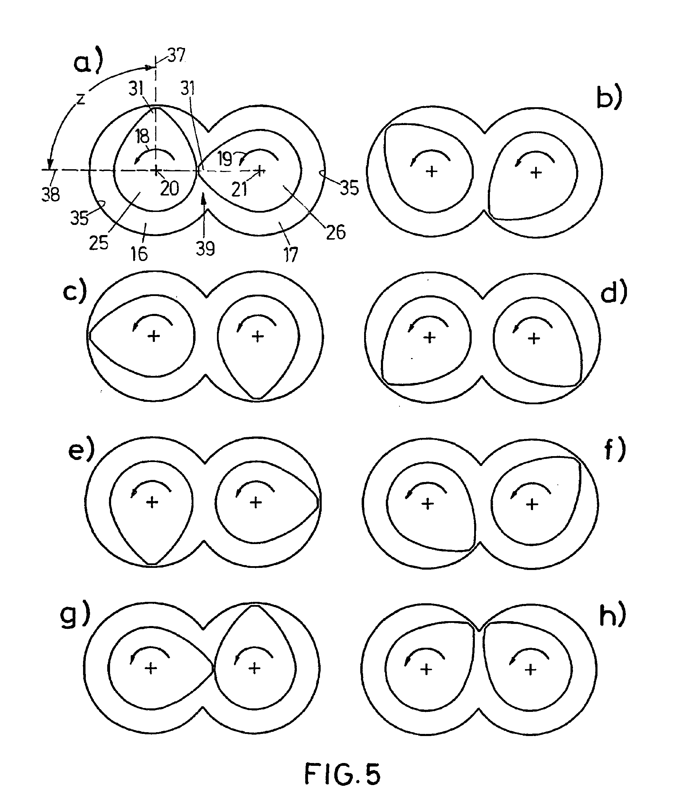

In den Figuren 3, 4 und 5 sind jeweils als Darstellungen a), b) ..., h) verschiedene Positionen eines Knetscheiben-Paares 39 bei einer fortgesetzten Drehung um die Drehachsen 20, 21 gezeigt. Hierbei ist lediglich die erste Darstellung a) mit Bezugszeichen versehen. Der von den Mittel-Längs-Ebenen 37, 38 eingeschlossene Profil-Versatz-Winkel wird mit z bezeichnet. Er beträgt im Fall von Figur 3 z = 0°, da die Mittel-Längs-Ebenen 37, 38 parallel zueinander verlaufen, bei Figur 4 z = 45° und bei Figur 5 z = 90°. Der Profil-Versatz-Winkel z kann innerhalb eines bestimmten Bereiches frei gewählt werden. Voraussetzung ist lediglich, daß sich die Knetscheiben 25, 26 eines Knetscheiben-Paares 39 bei der Drehung gegenseitig nicht blockieren. Es gilt: $- (b_E - b) \leq z \leq + (b_E - b)$. Die Einzeldarstellungen der Figuren 3, 4 und 5 zeigen, daß der Kamm 31 immer an der gesamten Wand 35 entlangstreift, wodurch diese gereinigt wird. Die Darstellungen a), b) ... , h) zeigen ferner, daß sich die Knetscheiben 25, 26 eines Knetscheiben-Paares 39 entlang eines Teils ihrer Mantellinie 27, 28 gegenseitig abstreifen. Eine Abstreifsituation ist z. B. in den Figuren 3c) und 3g) gezeigt. Nicht-Abstreifsituationen sind beispielsweise in den Figuren 3a), 3b), 3d), 3e), 3f), 3h) gezeigt.

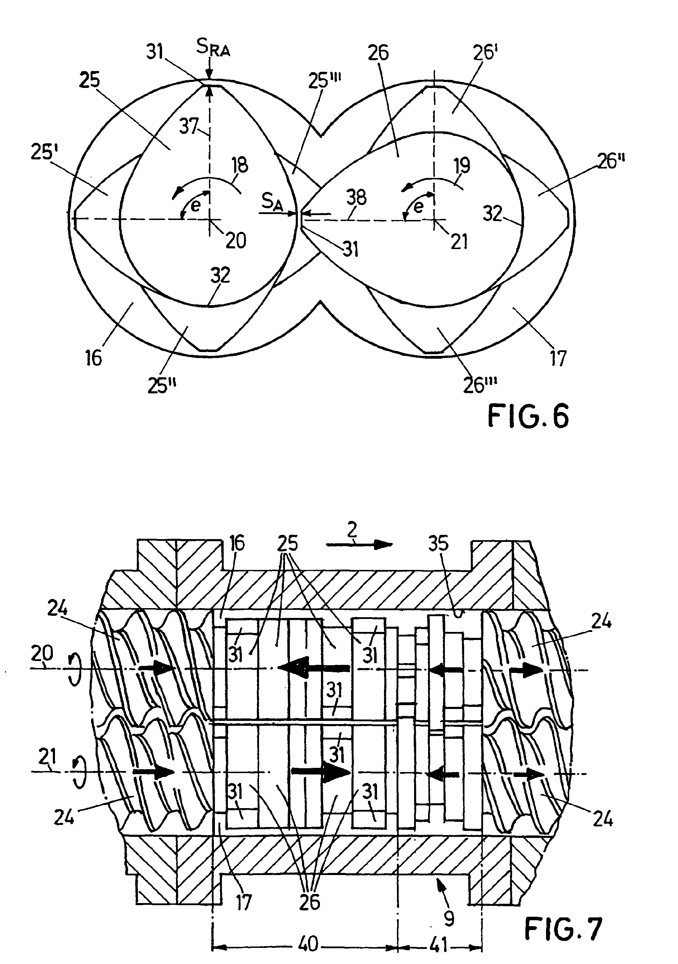

Auf den Wellen 22, 23 sind mehrere Knetscheiben 25 bzw. 26 in Arbeits-Richtung 2 hintereinander angeordnet. Der Winkel, den die Mittel-Längs-Ebenen 37, 38 zweier in Arbeits-Richtung 2 auf ein und derselben Welle 22 bzw. 23 hintereinander folgender Knetscheiben 25 bzw. 26 einschließen, wird als Versatz-Winkel e bezeichnet. Bei einem Winkel e = 180°, dem sogenannten neutralen Versatz-Winkel, findet durch die hintereinander angeordneten Knetscheiben 25 bzw. 26 keine Gesamt-Förderung des im Extruder bearbeiteten Materials in oder entgegen der Arbeits-Richtung 2 statt. Durch die Wahl des Versatz-Winkels e kann eine aktive Förderung, ein schwacher Abstau oder stärkerer Abstau bewirkt werden. Werden in Arbeits-Richtung 2 aufeinanderfolgende Knetscheiben 25 bzw. 26 um einen Versatz-Winkel 0° < |e| < 180° entgegen der Dreh-Richtung 18 bzw. 19 versetzt angeordnet, so tritt eine Förderung des im Extruder 1 bearbeiteten Materials in Arbeits-Richtung 2 auf. Kleine Versatz-Winkel e bewirken eine höhere Förderwirkung als große Versatz-Winkel e. Bei einem Versatz-Winkel 0° < |e| < 180° in Dreh-Richtung 18 bzw. 19 erfolgt die Förderung entgegen der Arbeits-Richtung 2. In Figur 6 sind in Arbeits-Richtung 2 vier hintereinander angeordnete Knetscheiben 25, 25', 25'', 25''' und 26, 26', 26'', 26''' dargestellt. Die sich um die Drehachse 20 drehenden Knetscheiben 25, 25', 25'', 25''' sind jeweils um einen Versatz-Winkel e = 90° in Dreh-Richtung 18 gegeneinander versetzt, wodurch eine Förderung entgegen der Arbeits-Richtung 2 bewirkt wird. Die sich um die Drehachse 21 drehenden Knetscheiben 26, 26', 26'', 26''' sind um einen Versatz-Winkel e = 90° entgegen der Dreh-Richtung 19 gegeneinander versetzt, wodurch eine Förderung in Arbeits-Richtung 2 bewirkt wird. Eine derartige Anordnung von Knetscheiben wird als Schmelze-Rückförderungs-Stufe 40 bezeichnet, da das bearbeitete Material aufgrund der Vorwärts- und Rückwärtsförderung zirkuliert. Die Versatz-Winkel e müssen selbstverständlich so gewählt sein, daß sich die Knetscheiben 25, 26 insgesamt bei der Drehung um die Drehachsen 20 bzw. 21 gegenseitig nicht blockieren. Für die möglichen Versatz-Winkel e, wobei die Knetscheiben 25, 25', 25'', 25''' der einen Welle 22 in Dreh-Richtung 18 und diejenigen der anderen Welle 23 entgegen der Dreh-Richtung 19 gleichmäßig versetzt sind, gilt der in der folgenden Tabelle dargestellte Zusammenhang.

| Versatz-Winkel e | möglich bis Radienverhältnis $R_A/R_I$ |
| --- | --- |
| 90° | 2,4142 |
| 60° | 1,3660 |
| 45° | 1,1795 |
| 36° | 1,1085 |

Die Knetscheiben 25, 26 beider Wellen 22, 23 können zusammenfassend so angeordnet sein, daß beide Knetscheiben in gleicher Richtung fördern oder die Knetscheiben der einen Welle in stromabwärtiger und die Knetscheiben der anderen Welle in stromaufwärtiger Richtung fördern. Dadurch wird die Schmelze auf einer Welle in stromaufwärtige Richtung zurückgeführt und die Längsmischung erheblich verstärkt. Es ist auch eine alternierende Einbauweise möglich, nach der Knetscheiben mit unterschiedlichen Versatz-Winkeln abwechselnd hintereinander angeordnet werden.

Wie in Figur 7 gezeigt, können Schnecken-Elemente 24 sowie Knetscheiben 25, 26 in Folge hintereinander angeordnet werden. Dicht kämmenden Schnecken-Elementen 24 ist eine Schmelze-Rückförderungs-Stufe 40 nachgeordnet, an welche sich eine Abstau-Stufe 41 bekannter Art anschließt, welche die Rückstaulänge stromaufwärts zur, also entgegen der Arbeits-Richtung 2 beeinflußt. Der Abstau-Stufe 41 sind dicht kämmende Schnecken-Elemente 24 zur Förderung in Arbeits-Richtung 2 nachgeordnet.

**Patentansprüche**

**1.** Zwei-Wellen-Extruder

a) mit einem Gehäuse (5) mit einer Arbeits-Richtung (2),

b) mit zwei einander teilweise durchdringenden, zueinander parallelen Gehäuse-Bohrungen (16, 17),

c) mit zwei in den Gehäuse-Bohrungen (16, 17) angeordneten, gleichsinnig mit jeweils einer Dreh-Richtung (18, 19) um eine Drehachse (20, 21) drehantreibbaren Wellen (22, 23), wobei die Drehachsen (20, 21) einen Abstand A voneinander aufweisen, und

d) mit auf den Wellen (22, 23) drehfest angebrachten, eingängigen Knetscheiben (25, 25', 25'', 25''', 26, 26', 26'', 26''') mit zur jeweiligen Drehachse (20, 21) parallel verlaufenden Mantellinien (27, 28), wobei die Knetscheiben (25, 25', 25'', 25''', 26, 26', 26'', 26''') im Querschnitt senkrecht zur Drehachse (20, 21) aufweisen,

i) einen als Kreisabschnitt um die jeweilige Drehachse (20, 21) ausgebildeten Kamm (31) mit einem Kamm-Winkel b und einem Radius $R_A$,

ii) einen als Kreisabschnitt um die jeweilige Drehachse (20, 21) ausgebildeten Grund (32) mit einem Grund-Winkel g und einem Radius $R_I$,

iii) zwei den Kamm (31) und den Grund (32) verbindende Flanken (33),

iv) wobei gilt: $R_A > R_I$ und $A \cong R_A + R_I$,

e) wobei die Knetscheiben (25, 25', 25'', 25''', 26, 26', 26'', 26''') jeweils Mittel-Längs-Ebenen (37, 38), die durch die jeweilige Drehachse (20, 21) und durch die Mitte des Kamms (31) verlaufen, aufweisen, wobei die Mittel-Längs-Ebenen (37, 38) zweier in Arbeits-Richtung (2) auf einer Welle (22, 23) benachbarter Knetscheiben (25, 25', 25'', 25''', 26, 26', 26'', 26''') einen Versatzwinkel e einschließen,

f) wobei die Knetscheiben (25, 25', 25'' ,25''', 26, 26', 26'', 26''') mindestens einer Welle (22, 23) jeweils in Arbeits-Richtung (2) um einen Versatz-Winkel e entgegen der Dreh-Richtung (18, 19) zur Förderung in Arbeits-Richtung (2) versetzt sind, wobei gilt: 0° < |e| < 180°, und/oder

g) wobei die Knetscheiben (25, 25', 25'', 25''', 26, 26', 26'', 26''') mindestens einer Welle (22, 23) jeweils in Arbeits-Richtung (2) um einen Versatz-Winkel e in Dreh-Richtung (18, 19) zur Förderrichtung entgegen der Arbeits-Richtung (2) versetzt wird, wobei gilt: 0° < |e| < 180°,

**dadurch gekennzeichnet,**

h) **dass** die miteinander den Versatz-Winkel e einschließenden Knetscheiben (25, 25', 25'', 25''', 26, 26', 26'', 26''') unmittelbar zueinander benachbart sind,

i) **dass** für den Kamm-Winkel b gilt: $3° \leq b \leq 20°$, und

j) **dass** die Knetscheiben (25, 25', 25'', 25''', 26, 26', 26'', 26''') der beiden Wellen (22, 23) jeweils in der gleichen Richtung, jedoch mit unterschiedlichen Versatz-Winkeln e angeordnet sind.

**2.** Zwei-Wellen-Extruder gemäß Anspruch 1, **dadurch gekennzeichnet, dass** die Knetscheiben (25, 25', 25'', 25''', 26, 26', 26'', 26''') spiegelsymmetrisch bezüglich der jeweiligen Mittel-Längs-Ebene (37, 38) ausgebildet sind.

**3.** Zwei-Wellen-Extruder gemäß einem der vorstehenden Ansprüche, **dadurch gekennzeichnet, dass** Knetscheiben (25, 25', 25'', 25''', 26, 26', 26'', 26''') in den Gehäusebohrungen (16, 17) ein Radialspiel $S_{RA}$ besitzen.

**4.** Zwei-Wellen-Extruder gemäß Anspruch 3, **dadurch gekennzeichnet, dass** zur Erzeugung des Radialspiels $S_{RA}$ bei gleichbleibenden Durchmessern der Gehäusebohrungen (16) der Radius $R_A$ verringert und $R_I$ vergrößert wird und damit das Verhältnis $R_A /R_I$ kleiner ausgebildet ist.

**5.** Zwei-Wellen-Extruder gemäß Anspruch 1, **dadurch gekennzeichnet, dass** zwei Knetscheiben (25, 25', 25'', 25''', 26, 26', 26'', 26'''), die auf den zwei Wellen (22, 23) im gleichen Querschnitt angeordnet sind, ein Knetscheiben-Paar (39) bilden, wobei die Mittel-Längs-Ebenen (37, 38) der Knetscheiben (25, 25', 25'', 25''', 26, 26', 26'', 26''') eines Knetscheiben-Paares (39) einen Profil-Versatz-Winkel z einschließen, so dass sich die Knetscheiben (25, 26) bei der gleichsinnigen Drehung um die Drehachsen (20, 21) nicht blockieren.

**6.** Zwei-Wellen-Extruder gemäß Anspruch 5, **dadurch gekennzeichnet, dass** für den Profil-Versatz-Winkel gilt:

- $(b_E - b) \leq z \leq + (b_E - b)$, wobei der Winkel $b_E$ definiert ist als

$$b_E = 180° - 2 * \arccos \{0{,}5 * [1 + 1 / (R_A/R_I)]\}.$$

**Claims**

1.  Twin-screw extruder (1) comprising

    a) a casing (5) with a working direction (2);
    b) two partially intersecting casing bores (16, 17) which are parallel to each other;
    c) two shafts (22, 23) which are disposed in the casing bores (16, 17) and which are drivable for rotation in a respective direction of rotation (18, 19) about an axis of rotation (20, 21), the axes of rotation (20, 21) having a distance A from each other; and
    d) single-flight kneading disks (25, 25', 25", 25''', 26, 26', 26", 26''') which are non-rotatably mounted on the shafts (22, 23) and have surface lines (27, 28) extending parallel to the respective axis of rotation (20, 21), the kneading disks (25, 25', 25", 25''', 26, 26', 26'', 26'''), in a cross-section perpendicular to the axis of rotation (20, 21), comprising

    i) a crest (31) which is formed as a segment of a circle about the respective axis of rotation (20, 21) and which has a crest angle b and a radius $R_A$;
    ii) a bottom (32) which is formed as a segment of a circle about the respective axis of rotation (20, 21) and has a bottom angle g and a radius $R_I$;
    iii) two flanks (33) which interconnect the crest (31) and the bottom (32);
    iv) with $R_A > R_I$ and $A \cong R_A + R_I$;

    e) wherein the kneading disks (25, 25', 25", 25''', 26, 26', 26", 26''') have in each case central longitudinal planes (37, 38) which extend through the respective axis of rotation (20, 21) and through the centre of the crest (31), the central longitudinal planes (37, 38) of two kneading disks (25, 25', 25'', 25''', 26, 26', 26'', 26'''), which are arranged next to each other on a shaft (22, 23) when seen in the working direction (2), enclosing an offset angle e;
    f) wherein the kneading disks (25, 25', 25", 25''', 26, 26', 26'', 26''') of at least one shaft (22, 23) are in each case offset in the working direction (2) by an offset angle e opposite to the direction of rotation (18, 19) for conveyance in the working direction (2), with $0° < |e| < 180°$; and/or
    g) wherein the kneading disks (25, 25', 25'', 25''', 26, 26', 26", 26'') of at least one shaft (22, 23) are offset in the working direction (2) by an offset angle e in the direction of rotation (18, 19) for conveyance opposite to the working direction (2), with $0° < |e| < 180°$;
    **characterized in**
    h) **that** the kneading disks (25, 25', 25", 25''', 26, 26', 26", 26'''), which enclose the offset angle e, are directly adjacent to each other;
    i) **that** $3° \leq b \leq 20°$ applies to the crest angle b; and
    j) **that** the kneading disks (25, 25', 25", 25''', 26, 26', 26", 26''') of the two shafts (22, 23) are disposed in the same direction, however at varying offset angles e.

2.  Twin-screw extruder (1) according to claim 1, **characterized in that** the kneading disks (25, 25', 25'', 25''', 26, 26', 26", 26''') are formed mirror-symmetrically with respect to the respective central longitudinal plane (37, 38).

3.  Twin-screw extruder (1) according to one of the preceding claims, **characterized in that** kneading disks (25, 25', 25", 25''', 26, 26', 26'', 26''') have a radial clearance $S_{RA}$ in the casing bores (16, 17).

4.  Twin-screw extruder (1) according to claim 3, **characterized in that** in order to achieve of the radial clearance $S_{RA}$, the radius $R_A$ is reduced and $R_I$ is increased while the diameters of the casing bores (16) remain constant, with the ratio $R_A/R_I$ thus being smaller.

5.  Twin-screw extruder (1) according to claim 1, **characterized in that** two kneading disks (25, 25', 25'', 25''', 26, 26', 26'', 26'''), which are disposed on the two shafts (22, 23) in the same cross-section, form a pair (39) of kneading disks, with the central longitudinal planes (37, 38) of the kneading disks (25, 25', 25'', 25''', 26, 26', 26'', 26''') of a pair (39) of kneading disks enclosing a profile offset angle z so that the kneading disks (25, 26) do not block each other when rotating in the same direction about the axes of rotation (20, 21).

6. Twin-screw extruder (1) according to claim 5, **characterized in that**

- $(b_E - b) \leq z \leq + (b_E - b)$ applies to the profile offset angle z, the angle $b_E$ being defined as

$$b_E = 180° - 2 * \arccos \{0.5 * [1 + 1 / (R_A / R_I)]\}.$$

**Revendications**

1. Extrudeuse à deux vis

a) comportant un carter (5) avec une direction de travail (2),

b) comportant deux alésages (16, 17) dans le carter, parallèles entre eux et pénétrant partiellement l'un dans l'autre,

c) comportant deux arbres (22, 23), montés dans les alésages (16, 17) du carter, pouvant être entraînés en rotation dans le même sens, respectivement avec une direction de rotation (18, 19) autour d'un axe de rotation (20, 21), les axes de rotation (20, 21) étant situés à une distance A l'un de l'autre, et

d) comportant des disques de malaxage (25, 25', 25", 25''', 26, 26', 26", 26''') à pas simple, montés solidaires en rotation sur les arbres (22, 23) et munis de lignes d'enveloppe orientées parallèlement à l'axe de rotation (20, 21) respectif, les disques de malaxage (25, 25', 25", 25''', 26, 26', 26" , 26''') étant munis dans une section perpendiculaire à l'axe de rotation (20, 21) :

i) d'une crête (31) réalisée sous la forme d'une partie circulaire autour de l'axe de rotation (20, 21) respectif et ayant un angle de crête b et un rayon $R_A$,

ii) d'un fond (32) réalisé sous la forme d'une partie circulaire autour de l'axe de rotation (20, 21) respectif et ayant un angle de fond g et un rayon $R_I$,

iii) de deux flancs (33) reliant la crête (31) et le fond (32),

iv) sachant que $R_A > R_I$ et $A \cong R_A + R_I$,

e) les disques de malaxage (25, 25', 25'', 25''', 26, 26', 26'', 26''') comportant respectivement des plans longitudinaux médians (37, 38), qui traversent l'axe de rotation (20, 21) respectif et le milieu de la crête (31), lesdits plans longitudinaux médians (37, 38) de deux disques de malaxage (25, 25', 25'', 25''', 26, 26', 26'', 26''') adjacents sur un arbre (22, 23) dans la direction de travail (2), formant un angle de déport e,

f) les disques de malaxage (25, 25', 25", 25''', 26, 26', 26'', 26''') d'au moins un arbre (22, 23) étant décalés respectivement dans la direction de travail (2) selon un angle de déport e à l'encontre de la direction de rotation (18, 19) pour transporter dans la direction de travail (2), sachant que 0° < |e| < 180°, et/ou

g) les disques de malaxage (25, 25', 25", 25''', 26, 26', 26", 26''') d'au moins un arbre (22, 23) étant décalés respectivement dans la direction de travail (2) selon un angle de déport e dans la direction de rotation (18, 19) pour transporter dans la direction de travail (2), sachant que 0° < |e| < 180°,

**caractérisée en ce que**

h) les disques de malaxage (25, 25', 25'', 25''', 26, 26', 26", 26''') formant entre eux un angle de déport e sont directement adjacents l'un à l'autre,

i) l'angle de crête b mesure : 3° ≤ b ≤ 20°, et

j) les disques de malaxage (25, 25', 25", 25''', 26, 26', 26", 26''') des deux arbres (22, 23) sont disposés dans la même direction, mais avec des angles de déport e différents.

2. Extrudeuse à deux vis selon la revendication 1, **caractérisée en ce que** les disques de malaxage (25, 25', 25", 25''', 26, 26', 26", 26''') sont réalisés symétriquement par rapport au plan longitudinal médian (37, 38) respectif.

3. Extrudeuse à deux vis selon l'une quelconque des revendications précédentes, **caractérisée en ce que** des disques de malaxage (25, 25', 25'', 25''', 26, 26', 26", 26''') possèdent un jeu radial $S_{RA}$ dans les alésages (16, 17) du carter.

**4.** Extrudeuse à deux vis selon la revendication 3, **caractérisée en ce que** pour générer le jeu radial $S_{RA}$ avec des alésages (16) de diamètre identique, le rayon $R_A$ est diminué et le rayon $R_I$ est agrandi et, de ce fait, le rapport $R_A/R_I$ est plus petit.

**5.** Extrudeuse à deux vis selon la revendication 1, **caractérisée en ce que** deux disques de malaxage (25, 25', 25'', 25''', 26, 26', 26'', 26''') , qui sont disposés sur les deux arbres (22, 23) dans la même section, forment une paire de disques de malaxage (39), les plans longitudinaux médians (37, 38) des disques de malaxage (25, 25', 25'', 25''', 26, 26', 26'', 26''') d'une paire de disques de malaxage (39) formant un angle de déport de profil z, de telle sorte que les disques de malaxage (25, 26) ne bloquent pas au moment de la rotation dans le même sens autour des axes de rotation (20, 21).

**6.** Extrudeuse à deux vis selon la revendication 5, **caractérisée en ce que** pour l'angle de déport de profil z, on applique :

- $(b_E - b) \leq z \leq + (b_E - b)$, l'angle $b_E$ étant défini selon la valeur $b_E = 180° - 2 * arccos \{0,5 * [1 + 1/(R_A/R_I)]\}$.

FIG.1

FIG.2

FIG.3

FIG.4

FIG.5

FIG.6

FIG.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 813154 B
- DE 2802125 A1
- DE 19718292 A1
- DE 1035890
- DE 4329612 A
- US 08292876 B
- JP 9109231 A
- DE 4338795 C